# EUROPEAN PATENT APPLICATION

(11) **EP 4 818 121 A1**
(43) Date of publication of application: **07.10.2026**
(21) Application number: 25168244.9
(22) Date of filing: 03.04.2025
(51) Int. Cl.: C01B 33/039

(54) **A METHOD FOR PRODUCING SILICON CONTAINING FLUID AND A SILVER RICH RESIDUE FROM CRYSTALLINE SILICON TYPE SOLAR PANEL WASTE**

(71) Applicant: Altenberend, Jochen, 71870 Laizé (FR)
(72) Inventor: Altenberend, Jochen, 71870 Laizé (FR)
(74) Representative: Patentanwälte Ruff, Wilhelm, Beier, Dauster & Partner mbB

(57) **Abstract**

A method for producing silicon containing fluid and a silver rich residue from crystalline silicon type solar panel waste.

## Description

### TECHNICAL FIELD AND PRIOR ART

The present invention relates to the field of chemical synthesis, specifically to efficient usage of a silicon-silver mix extracted from crystalline silicon type solar panel waste in a process for the production of a silicon containing fluid that can be used in the chemical industry and the recovery of silver as a silver rich residue.

The large scale success of crystalline silicon type solar panels for electricity production comes with higher and higher consumption of silver and silicon. The role of the silver used in the front contacts is to collect the electric current while limiting the shadow on the cell and avoiding the pollution of the high purity silicon in the cell. The extraction of this silver from mining is costly and has a high environmental impact (Deforestation, Water pollution, Air Pollution, Soil Contamination, Greenhouse gas emissions). The role of the silicon is to transform the light into electricity by creating electron-hole pairs that are collected at contacts and create an electric current. The production of metallurgical grade silicon which is used as raw material for the production of high purity silicon has also a high environmental impact (High Energy consumption, Greenhouse gas emissions, Air Pollution, Water pollution). During the manufacturing of the crystalline silicon type solar panel the silver is applied in fine lines to the silicon wafer by screen printing and firing. This generates a connection between the two materials that lasts over the lifetime of the solar panel and allows an efficient collection of the electric current. However, this strong connection makes the separation of these two materials for recycling difficult.

More and more crystalline silicon type solar panels reach their end of life and thus become crystalline silicon type solar panel waste. This crystalline silicon type solar panel waste is a low cost environmentally friendly source of silver and silicon and also copper, aluminium, glass and some other materials. There are several technologies available to extract a silicon-silver mix from the glass panels and the aluminium frame of the crystalline silicon type solar panel waste:
For example, in WO 2018/137735 A1, the front of a solar panel is exposed to intense light to heat up the polymers and thus separate the cells from the other layers.

SALAS-REDONDO et al. (SALAS-REDONDO, Caterin, BADE, Stefan, CHALAUX, Antoine, et al. Recycled Silicon for Chlorosilane production. Available at SSRN 4943277, 2024) describes a pyrolysis process where in a large batch oven heated with natural gas solar modules are delaminated to obtain glass, copper ribbons, and a silicon-silver mix (silicon cells).

The silicon-silver mix can be recycled in many industrials applications that consume silicon, for example as alloying element for Aluminium-Silicon alloys that are used in foundry applications. However, this would lead to the loss of the value of the silver contained in the silicon-silver mix and destroy the opportunity to recycle this silver. The silver in the solar cell is strongly connected to the silicon making the recycling of the silver to applications that consume silver very difficult. While the silver in the solar panel represents only around 0.05 % by weight, based on the total weight of the solar panel, it represents around 40% of the value. In the cell the silver represents around 1 % by weight, based on the total weight of the cell, and 80% of the value while silicon represents more than 95 % by weight, based on the total weight of the cell. This low silver to silicon ratio makes this silicon-silver mix unsuitable for industrial silver recycling technologies. It is important to separate the silver from the silicon in the silicon-silver mix so that it can be recycled.

Some processes to recover the silver from the silicon-silver mix have already been developed: EP3178576A1 and CN106629738B describe the recovery of silver by dissolution of the silver of the silicon-silver mix in an ionic liquid, separating the silver containing residues and recovery of the silver by electrolysis. WO2022239061A1 describes the separation of silver from the silicon of the silicon-silver mix by melting the silver and letting it drop. WO2020240126A1 describes a method to detach the silver from the silicon of the silicon-silver mix by putting a photovoltaic cell in a basic solution. FR3096833A1 describes a method to separate the detached silver from the remaining silicon by vibration. EP4400617A1 describes a method to detach the silver lines by ultrasound. WO2023147804A1 describes a method to dissolve the silicon-silver mix in a lye and recover the silver.

SALAS-REDONDO et al. describes the use of silicon extracted from solar panel waste for the production of chlorosilanes. It does use silicon from solar cells where the silver has previously been removed and does not recover any silver from the process of chlorosilane production.

Several processes that use silicon metal and a precursor gas or precursor liquid to produce a silicon containing fluid are widely used in industry and are described for example by SALAS-REDONDO et al.: The process chlorination, also known as direct chlorination, uses chlorine (Cl2) as precursor gas and produces silicon tetrachloride (SiCl4). The process hydrochlorination, also known as direct hydrochlorination, uses hydrogen chloride (HCl) as precursor to produce a mixture of trichlorosilane (SiHCl3) and silicon tetrachloride (SiCl4). The process direct synthesis, also known as direct alkoxysilane synthesis, uses alcohols (ROH) as precursor gas or precursor liquid to produce Alkoxysilane (Si(OR)4). The Muller Rochow process, also known as Direct Process or Direct MCS Process, uses Methlylchloride (CH3Cl) as precursor gas to synthesize a mixture of different Alkylhalosilanes and other molecules containing silicon. The process cold hydrogenation, also known as Hydrochlorination or Hydrogenation, uses silicon tetrachloride and hydrogen as precursor gas to produce trichlorosilane. These processes are widely used in the chemical industry to produce silicon containing gases or liquids for many products such as silicon for photovoltaic applications, optical fibers, semiconductors, silanes, methylchlorosilanes, silicic acid esters or fumed silica.

US6407276B1 describes the synthesis process of dialkyldichlorosilane with the addition of 100 - 1000 ppm by weight of silver to the silicon to promote the selectivity of the synthesis of dialkyldichlorosilane.

The processes to produce silicon containing fluid have not been used with a silicon-silver mix from crystalline silicon type solar panel waste where the silver has been applied to the silicon through screen printing and firing and they can not been used to produce a silver rich residue.

A short-coming of some of the processes for solar panel recycling described above is that they only recycle the silver or only recycle the silicon while the other element is not recycled. Shortcomings of the existing processes that recycle silicon and silver are that they require chemicals for the processing of the silicon-silver mix and they generate waste chemicals that need to be reprocessed. They also need important investments for the set-up of a new plant for a safe handling of these chemical processes.

The present invention aims to address the problem of a lack of processes that allow to efficiently recycle both the silicon and the silver from the crystalline silicon type solar panel waste with consuming minimal additional chemicals and with generating minimal additional chemical wastes and with requiring minimal investments in new processing equipment.

### SUMMARY OF THE INVENTION

In view of the foregoing, the object underlying the present invention is therefore to make available a process that allows to recycle efficiently both the silicon and the silver from the crystalline silicon solar panel waste with a minimal consumption of additional chemicals and with a minimal generation of additional waste and with requiring minimal investments in new processing equipment.

This object is accomplished by the method according to independent claim 1. Preferred embodiments of the method are defined in the dependent claims 2 to 15. Further preferred embodiments of the invention are defined in the present description. The subject-matter and wording, respectively of all claims is hereby incorporated into the description by explicit reference.

According to a first aspect, the present invention relates to a method for producing silicon containing fluid and a silver rich residue from crystalline silicon type solar panel waste comprising the following steps, preferably sequential in time:
a) preparing of a silicon-silver mix (101) from crystalline silicon type solar panel waste, where the silver of the silicon-silver mix (101) was applied to the silicon of the silicon-silver mix (101) through screen printing and firing,
b) placing said silicon-silver mix (101) in a main reactor (102),
c) feeding a precursor gas or precursor liquid (205) into the main reactor (102), to produce a silicon containing fluid (207), in particular a silicon containing gas and/or a silicon containing liquid, that comprises silicon containing molecules, where the silver to silicon ratio of said silicon containing fluid (207) is more than 5 times lower than that of a remaining solid material (206) resulting from the silicon-silver mix (101) inside the main reactor (102), by reaction between the precursor gas or precursor liquid (205) and the silicon of the remaining solid material (206) in the main reactor (102), and evacuating said silicon containing fluid (207) from the main reactor (102), and where the silver to silicon ratio of the remaining solid material (206) in the main reactor (102) preferably increases, preferably during step c,
d) stopping the reaction by stopping the feeding of precursor gas or precursor liquid (205) and by evacuating the remaining silicon containing fluid (207) and/or precursor gas or precursor liquid (205) from the main reactor (102), when the remaining solid material (206) has turned into a silver rich residue (308) inside the main reactor (102) having a silver to silicon ratio that is at least 10 times higher than the silver to silicon ratio of the initial silicon-silver mix (101), preferably a silver to silicon ratio that is more than 100 times higher than the silver to silicon ratio of the silicon-silver mix (101), more preferably a silver to silicon ratio that is more than 1000 times higher than the silver to silicon ratio of the silicon-silver mix (101), and collecting the silver rich residue (308) from the main reactor (102),
e) preferably repeating steps a) to d), more preferably steps b) to d), at least once.

The silicon-silver mix is prepared from crystalline silicon type solar panel waste (step a) and placed in the main reactor (step b). In the next step (step c) a precursor gas or precursor liquid is fed into the main reactor and reacts with the silicon of the silicon-silver mix and produces a silicon containing fluid, comprising silicon containing molecules. The solid material resulting from the silicon-silver mix that has not reacted, forms a remaining solid material in the main reactor. The remaining solid material contains silver and silicon. The silver does not react with the precursor gas or precursor liquid, or it reacts and forms a solid reaction product such as silver chloride (AgCl). Therefore, the silicon containing fluid has a silver to silicon ratio that is at least 5 times lower than the silver to silicon ratio of the remaining solid material inside the main reactor. The silicon containing fluid is evacuated from the main reactor and thus silicon leaves the reactor and the silver to silicon ratio of the remaining solid material increases. The reaction is stopped (step d) when the remaining solid material inside the main reactor has reached a silver to silicon ratio that is at least 10 times higher than the silver to silicon ratio of the initial silicon-silver mix, preferably a silver to silicon ratio that is more than 100 times higher than the silver to silicon ratio of the silicon-silver mix, more preferably a silver to silicon ratio that is more than 1000 times higher than the silver to silicon ratio of the silicon-silver mix. The reaction is stopped by evacuating the remaining precursor gas or precursor liquid from the main reactor and or by evacuating the silicon containing fluid that may contain some unreacted precursor gas or precursor liquid. The remaining solid material in the main reactor that has a high silver to silicon ratio and has stopped reacting is named silver rich residue. This silver rich residue is collected from the main reactor. By repeating the process steps a) to d), preferably steps b) to d), silicon containing fluid and silver rich residue can be efficiently produced. The silicon containing fluid may be fed into subsequent processes where it brings a commercial value.

If for example the silver concentration in the silicon-silver mix is 1 % by weight, based on the total weight of the silicon-silver mix, and there is only silver and silicon in the silicon-silver mix, an increase to a 10 times higher silver to silicon ratio gives a silver rich residue with a silver concentration of 9 % by weight, based on the total weight of silver rich residue, an increase to a 100 times higher silver to silicon ratio gives a silver rich residue with a silver concentration of 50 % by weight, based on the total weight of silver rich residue, and an increase to a 1000 times higher silver to silicon ratio gives a silver concentration of 91 % by weight, based on the total weight of silver rich residue.

The term "crystalline silicon type solar panel waste" as used according to the present invention means a material that was obtained from a crystalline silicon type solar panel that was produced for electricity production. The material contains solar cells with crystalline silicon. The material may consist of broken solar panels or intact panels and that cannot be used for economically viable electricity production. The material may be polluted with dirt.

The term "precursor gas or precursor liquid" as used according to the present invention means a gas or a liquid that contains molecules that react with silicon to form molecules containing silicon. The precursor gas or precursor liquid is selected so that it reacts with the silicon of the silicon-silver mix to form one or more types of molecules that have at least one silicon atom and these molecules have a significantly lower melting point or boiling point than silver. The precursor gas or precursor liquid is selected so that it does not react with silver to form a gas or liquid. The precursor gas or liquid may react with silver to form a solid such as silver chloride (AgCl). The precursor gas or precursor liquid may comprise molecules selected from a group consisting of methyl chloride, chlorine, hydrogen chloride, hydrogen, alcohols or a mixture of at least two of the afore-said molecules.

The term "silicon containing molecules" as used according to the present invention means molecules that contain at least one silicon atom. It can be one type of molecules or a mixture of at least two types of molecules. The molecules can be for example alkylhalosilanes, alkoxysilanes, silicon tetrachloride, trichlorosilane or a mixture of at least two of these molecules.

The term "silicon containing fluid" as used according to the present invention means a gas or liquid or a mixture of a gas or liquid that contains molecules containing silicon. It may also contain unreacted precursor gas or precursor liquid and other gases or liquids. The silicon containing fluid can have different concentrations of silicon containing molecules.

The "silicon concentration" of a materials as used according to the present invention means the ratio between the total mass of silicon as part of molecules or as metal in the material and the total mass of the material. The material can be a solid, a liquid or a gas. The concentration of silicon in the silicon containing fluid is the ratio between the mass of silicon as part of molecules and the total mass of the molecules in the silicon containing fluid.

The "silver concentration" of a material as used according to the present invention means the ratio between the total mass of silver as part of molecules or as metal in the material and the total mass of the material. The material can be a solid, a liquid or a gas. The concentration of silver in the silicon containing fluid is the ratio between the mass of silver as part of molecules and the total mass of the molecules in the silicon containing fluid.

The "silver to silicon ratio" of a material as used according to the present invention means the ratio between the silver concentration of the material and the silicon concentration of the material.

The term "silicon-silver mix" as used according to the present invention means a material mix containing silicon and silver. The silicon-silver mix is extracted from crystalline silicon type solar panel waste. During the fabrication of the crystalline silicon type solar panel the silver was applied to the silicon solar cell through screen printing and firing. The silicon-silver mix may also contain other materials contained in the crystalline silicon type solar panel waste such as silicon nitride (Si3N4), copper (Cu), aluminium (Al) or glass.

The term "screen printing" as used according to the present invention means a technique used to apply silver pastes, onto the surface of a solar cell substrate to form functional layers or patterns. This process involves a mesh screen with a pre-designed stencil pattern that allows the silver paste to pass through only in specific areas. The screen is placed in close contact with the substrate, and the paste is forced through the open mesh areas using a squeegee. This technique is commonly employed to create fine, precise features such as front-side metallization patterns (e.g., gridlines and busbars) or back-side contacts, ensuring efficient electrical conductivity and minimizing shading on the active area of the solar cell.

The term "firing" as used according to the present invention means a high-temperature thermal process used to sinter and bond the silver paste to the solar cell substrate. This process typically involves heating the solar cell in a controlled environment, often in a belt furnace, to temperatures ranging from 700°C to 900°C for a precise duration. During firing, the organic components of the paste are burned off, and the silver forms a strong mechanical and electrical connection with the silicon wafer. Firing is critical for optimizing the performance and durability of the solar cell by ensuring robust electrical contact and low resistance in the metallization layers.

The term "reactor" as used according to the present invention means a specialized vessel or apparatus designed to facilitate chemical reactions under controlled conditions for the production of silicon containing fluid. The reactor may be constructed to withstand high temperatures and corrosive environments characteristic of the reaction process. It may incorporate features such as temperature regulation, pressure control, feedstock introduction systems, and provisions for removing reaction products. The design and operation of the reactor are optimized to ensure efficient conversion, product purity, and safe handling of the reactive and hazardous materials involved process to produce a silicon containing fluid and a silver rich residue.

The term "remaining solid material" as used according to the present invention means a solid material resulting from the reaction between the silicon-silver mix and the precursor gas or precursor liquid. The remaining solid material remains in the reactor while the silicon containing fluid is evacuated from the reactor.

The term "silver rich residue" as used according to the present invention means a remaining solid material that remains in the reactor after the said remaining solid materials has reached a silver to silicon ratio that is more than 10 times higher than the silver to silicon ratio of the initial silicon-silver mix, preferably a silver to silicon ratio that is more than 100 times higher than the silver to silicon ratio of the silicon-silver mix, more preferably a silver to silicon ratio that is more than 1000 times higher than the silver to silicon ratio of the silicon-silver mix and after the feeding of precursor gas or precursor liquid to the reactor has been stopped. The silver rich residue remains in the reactor after at least a part of the silicon of the silicon-silver mix has reacted with the precursor gas to form a silicon containing fluid that has been removed from the reactor. The silver rich residue may also contain other materials that may be contained in the silicon-silver mix such as silicon nitride (Si3N4), copper (Cu), aluminium (Al) or glass.

The present invention is characterized in particular by the following advantages:
- it allows to recycle both the silicon and the silver,
- It only requires a minimal consumption of additional chemicals to the chemicals that are currently used for the production of silicon containing fluid,
- it does produce minimal additional waste chemicals to the waste chemicals that are currently produced during the production of silicon containing fluid,
- It can be easily integrated into existing plants for the production of silicon containing fluid with minimal investments in new processing equipment, and
- it does not require the costly set up of a new chemical plant.

In an embodiment of the invention the precursor gas or precursor liquid (205) comprises molecules selected from a group consisting of alkyl halides, chlorine, hydrogen chloride, hydrogen, alcohols or a mixture of at least two of the afore-said molecules.

The molecules of the precursor gas or precursor liquid should be selected so that they react with silicon of a remaining solid material that contains silicon and silver to produce a silicon containing fluid with a silver to silicon ratio that is at least 5 times higher than the silver to silicon ratio of the remaining solid material and where the silicon containing fluid can be used commercially. Examples of molecules that fit these criteria include alkyl halides, chlorine, hydrogen chloride, hydrogen, alcohols.

In an embodiment of the invention the silicon containing molecules comprises molecules selected from a group consisting of alkylhalosilanes, alkoxysilanes, silicon tetrachloride, trichlorosilane or a mixture of at least two of the afore-said molecules.

The silicon containing fluid should be commercially useable and contain molecules that have a commercial value and contain silicon. Examples of such molecules are alkylhalosilanes, alkoxysilanes, silicon tetrachloride, trichlorosilane.

Preferably, the silicon containing fluid is a gas and comprises molecules selected from a group consisting of silicon tetrachloride, trichlorosilane, chlorine, hydrogen or a mixture of at least two of the afore-said molecules and the precursor gas comprises molecules selected from a group consisting of chlorine, hydrogen chloride, hydrogen, silicon tetrachloride or a mixture of at least two of the afore-said molecules.

Preferably, the silicon containing fluid comprises molecules selected from a group consisting of alkoxysilanes or a mixture of at least two of the afore-said molecules and the precursor gas or precursor liquid comprises molecules selected from a group consisting of alcohols or a mixture of at least two of the afore-said molecules.

Preferably, the silicon containing fluid is a gas and comprises molecules selected from a group consisting of alkylhalosilanes or a mixture of at least two of the afore-said molecules and the precursor gas comprises molecules of alkyl halides.

In an embodiment of the invention the method comprises an additional step b'), carried out between step b) and step c): feeding silicon-silver mix (101) into the main reactor (102) and feeding precursor gas or precursor liquid (205) into the main reactor (102), to produce a silicon containing fluid (207), in particular a silicon containing gas and/or a silicon containing liquid, and evacuating silicon containing fluid (207) from the main reactor (102) until an amount of silver has accumulated in the remaining solid material (206) inside the main reactor (102).

When the silicon of the remaining solid material inside the main reactor is consumed the volume of the remaining solid material decreases. The feeding of silicon-silver mix allows to compensate the reduced volume of the solid materials inside the main reactor. With new silicon-silver mix in the reactor the reaction between the precursor gas or precursor liquid and the silicon is more efficient so that more silicon containing molecules can be produced in a given time.

The amount of silver can be an amount of silver that takes a part of the volume of the reactor and thus reduces the efficiency of the reaction and the concentration of silicon in the silicon containing fluid or it can be an amount of silver whose commercial value is so high that the financial cost of keeping it in the reactor is significant or a combination of the two definitions. This additional step allows that the same reactor produces more silicon containing molecules and more silver rich residue in a given time.

This additional step also allows to produce a larger amount of silicon containing fluid and silver rich residues between two operations of recovering the silver rich residue.

In an embodiment of the invention the main reactor (102) and an additional reactor (410) are connected, preferably with tubes and valves (415) (416) (517) (518) (519), so that they can be operated in series one after the other.

During step c) at the beginning the main reactor preferably produces silicon containing fluid with a high silicon concentration. Then, when the silicon concentration in the remaining solid material in the main reactor decreases the silicon concentration in the silicon containing fluid evacuated from the main reactor may also decrease (The terms remaining solid material with reduced silicon concentration and silicon containing fluid with reduced silicon concentration can be used to describe these two materials when the silicon concentration has decreased). This modification of the silicon concentration may lead to the silicon containing fluid with reduced silicon concentration being not usable anymore for applications that need silicon containing fluid with a high silicon concentration. This embodiment of the invention solves this problem by connecting the main reactor to an additional reactor. The silicon containing fluid evacuated from the main reactor may be fed into the additional reactor where the unreacted precursor gas or precursor liquid reacts with a material containing metallic silicon and increase the silicon concentration of the silicon containing fluid with reduced silicon concentration. The silicon containing fluid preferably is evacuated from the additional reactor. The additional reactor may also continue to produce silicon containing fluid while the main reactor is not producing silicon containing fluid (for example in step b and d).

Preferably the valves (416), (517), (518) and (519) are three-way valves.

Preferably the three-way valves and tubes can be replaced by other valves and additional tubes that allow to control the flow of material between the main reactor and the additional reactor in a similar way.

In an embodiment of the invention in step c) and/or b') silicon containing fluid (207) evacuated from the main reactor (102) is fed into the additional reactor (410) that contains metallurgical grade silicon (414), and the silicon containing fluid (207) is evacuated from the additional reactor (410).

The additional reactor may be filled with metallurgical grade silicon for an easier operation of this reactor. The operation of reactors with metallurgical grade silicon to produce silicon containing fluid is well understood. Operating the main reactor in series with a reactor that operates with metallurgical grade silicon gives more flexibility. The additional reactor can be fed with the silicon containing fluid from the main reactor. The unreacted precursor gas or precursor liquid in the silicon containing fluid reacts with the metallurgical grade silicon in the additional reactor and thus increases the silicon concentration of the silicon containing fluid. The additional reactor can also be fed with precursor gas or precursor liquid and can produce silicon containing fluid while the main reactor is not producing silicon containing fluid (for example, in step b and d).

The additional reactor can be the existing reactor of a plant that produces already silicon containing fluid.

In an embodiment of the invention steps b) to d) are also carried out in the additional reactor (410), wherein while step c) is carried out in the main reactor (102) step b') or c) are carried out in the additional reactor (410) and while step c) is carried out in the additional reactor (410) steps b') or c) are carried out in the main reactor (102).

Carrying out the steps b) to d) also in the additional reactor does not mean that each step must be carried out at the same time as in the main reactor.

During step c) at the beginning the main reactor produces silicon containing fluid with a high silicon concentration. Then, when the silicon concentration in the remaining solid material in the main reactor decreases, the silicon concentration in the silicon containing fluid evacuated from the main reactor may also decrease. During this time steps b') or c) are carried out in the additional reactor so that this reactor can produce silicon containing fluid with a high silicon concentration. Also, when the silicon concentration of the silicon containing fluid evacuated from the additional reactor decreases the steps b') or c) are carried out in the main reactor and the main reactor can produce silicon containing fluid with a high silicon concentration.

In an embodiment of the invention after carrying out steps a) to d) the main reactor (102) can be fed either with silicon containing fluid (207), evacuated from the additional reactor (410) while the additional reactor (410) is performing one of the steps b') to d), and/or with precursor gas or precursor liquid, and/or the additional reactor (410) can be fed either with the silicon containing fluid (207) evacuated from the main reactor (102) and/or with precursor gas or precursor liquid.

The silicon containing fluid with reduced silicon concentration, that is produced during step c) in the additional reactor, when the silicon concentration in the remaining solid material decreases, may contain unreacted precursor gas or precursor liquid. By feeding the silicon containing fluid with reduced silicon concentration evacuated from the additional reactor into the main reactor the unreacted precursor gas or precursor liquid can react with the silicon of the remaining solid material in the main reactor to produce silicon containing fluid. This reaction increases the silicon concentration in the silicon containing fluid that is fed into the main reactor and a silicon containing fluid with a higher silicon concentration is evacuated from the main reactor. When the main reactor produces silicon containing fluid with a reduced silicon concentration the additional reactor can be fed with this silicon containing fluid and increase the concentration of this silicon containing fluid. It is also possible to operate either the additional reactor or the main reactor as sole reactor so that the production of silicon containing fluid continues while one of the reactors does not produce silicon containing fluid (for example, in step b and d).

In an embodiment of the invention the temperature in the main reactor (102) and/or the additional reactor (410) is below 800°C, preferably below 400°C and the temperature in the main reactor (102) and/or the additional reactor (410) is above 50°C, and preferably above 100°C and more preferably above 200°C.

The temperature should be selected to obtain the desired silicon containing fluid at a high reaction rate. The temperature may be selected to increase the concentration of a silicon containing molecule with a high commercial value and reduce the concentration of silicon containing molecules with a lower commercial value in the silicon containing fluid.

A temperature in the main reactor or the additional reactor above 800°C should be avoided to make sure that the remaining solid material does not melt. The silicon silver eutectic point is at 835 °C. In conditions where silver chloride (AgCl) may form, for example when chlorine is used as precursor gas, temperatures in the main reactor or the additional reactor above 400°C should be avoided to make sure that the silver chloride does not melt. The melting point of silver chloride (AgCl) is at 455 °C.

In an embodiment of the invention the silver in the silver rich residue (308) is in the form of metallic silver or silver chloride.

Depending on the precursor gas or precursor liquid that is used the silver may either stay as silver in the remaining solid material and can then be recovered as silver in the silver rich residue or it may react to form solid silver chloride (AgCl) and remain as solid in the remaining solid material and can then be recovered as silver chloride (AgCl) in the silver rich residue. The silver rich residue may also contain a mixture of silver and silver chloride.

In an embodiment of the invention in step a) the silicon-silver mix (101) is prepared using one or more of the following process steps in any order:
a. Using mechanical removal of the aluminium frame pyrolysis to burn of the polymers of the crystalline silicon type solar panel waste,
b. Using electrostatic separation to increase the silicon concentration of the silicon-silver mix (101) by removing other materials,
c. Cleaning the silicon-silver mix (101) by acid leaching,
d. Mixing the silicon-silver mix (101) with metallurgical grade silicon (414),
e. Crushing the silicon-silver mix (101) to obtain a material with an average particle size of <10 mm, preferably <3 mm, and more preferably to <1 mm,
f. Using sieving to increase the silicon concentration of the silicon-silver mix (101) by removing other materials, and
g. Using air classification to increase the silicon concentration of the silicon-silver mix (101) by removing other materials.

Preferably, the crystalline silicon type solar panel waste contains the following amounts of material by weight, based on the total weight of the crystalline silicon type solar panel waste: glass 70%, aluminium 18%, polymer 7% and copper 1%. When preparing the silicon-silver mix; the cells containing the silicon and the silver need to be extracted and separated from these other materials. The crystalline silicon type solar panel waste may be in various different conditions. For example, as intact panels, broken panels or panels covered with dirt. The method to prepare the silicon-silver mix should accept various types of crystalline silicon type solar panel waste. The amount of remaining other materials in the silicon-silver mix should be minimized to minimize the amount of these materials in the silicon containing fluid and to obtain a silver rich residue with a better purity. The extraction of the silicon-silver mix should also allow an efficient recycling of the glass, the aluminium and the copper. The pyrolysis of the polymer makes the recycling of this materials impossible but greatly facilitates the recycling of the other materials.

In an embodiment of the invention the silicon-silver mix (101) comprises components selected from a group consisting of aluminium, glass, copper, other materials present in the crystalline silicon type solar panel waste or a mixture of at least two of the afore said components.

It can be acceptable to accept some amount of other materials from the crystalline silicon type solar panel waste in the silicon-silver mix. By accepting some amount of the other materials, the silicon-silver mix can be prepared more efficiently. The other materials contained in the silicon-silver mix that is fed into the main reactor may then be transformed in the main reactor.

In an embodiment of the invention after evacuating the silver rich residue (308) from the main reactor (102) and/or the additional reactor (410), this silver rich residue (308) is further refined by treating the silver rich residue (308) with chemical processes and/or metallurgical silver recycling processes.

For applications that require silver with a high purity additional refining may be required. Several processes can be used separately or in combination to extract high purity silver from the silver rich residue. In the cupellation process other metals can be oxidized and removed from the silver. In Electrolytic refining the silver rich residue is placed on anodes that dissolve in an electrolyte bath and pure silver is deposited onto a cathode. Acid treatment can be used to dissolve silver chloride that may be contained in the silver rich residue to extract silver as a solution. The silver is then precipitated using reducing agents.

In an embodiment of the invention the main reactor (102) and/or the additional reactor (410) is a fixed bed reactor, a stirred bed reactor, a fluidized bed reactor or a rotary kiln.

The choice of reactor should allow the renewal of the gas or liquid on the surface of each particle of the remaining solid material in the reactor, in order to bring always new precursor gas or precursor liquid to the surface of the particle. In one embodiment the reactor can be a fluidized bed reactor with any configuration.

In an embodiment of the invention the silver rich residue (308) is used as alloying element for the production of an alloy melt comprising silver as alloying element, preferably comprising silver and one component selected from the group consisting of silicon and copper as alloying elements, and more preferably comprising silver, silicon and copper as alloying elements.

The remaining silver rich residue may contain silicon, copper and/or aluminium from the crystalline silicon solar panel waste. For the extraction of high purity silver from this residue another process may be necessary. The silver rich residue can however be used directly in the preparation of an alloy melt. The silver rich residue can be molten together with other alloying elements in form of master alloys or raw metals. The composition of the melt can be measured by taking a sample of the melt solidifying it in a controlled way and analyzing the solidified sample with Spark Emission Optical Spectroscopy. Afterwards alloying elements can be added to adjust the composition of the melt. This method allows to efficiently use the value of the silver while minimizing costly processes and minimizing the generation of waste chemicals.

In other words, according to a second aspect the invention relates to the use of the silver rich residue as alloying element for the production of an alloy melt that comprises silver as alloying element, preferably comprising silver and one component selected from the group consisting of silicon and copper as alloying elements and more preferably that comprises silver, silicon and copper as alloying elements. With respect to further features and advantages of the use, reference is made in its entirety to the features and advantages described in terms of the method according to the first aspect of the invention. The features and advantages described under the first aspect of the invention do apply, mutatis mutandis, with respect to the method according to the second aspect of the invention.

Further features and advantages of the invention will become clear from the following description of preferred embodiments in form of examples in conjunction with the subject-matter of the dependent claims. The individual features can be realized either singularly or severally in combination in one embodiment of the invention. The preferred embodiments merely serve for illustration and better understanding of the invention and are not to be understood as in any way limiting the invention.

### BRIEF DESCRIPTION OF THE FIGURES

In the following, embodiments of the invention will be described in detail with reference to the drawings. Throughout the drawings, the same elements will be denoted by the same reference numerals.

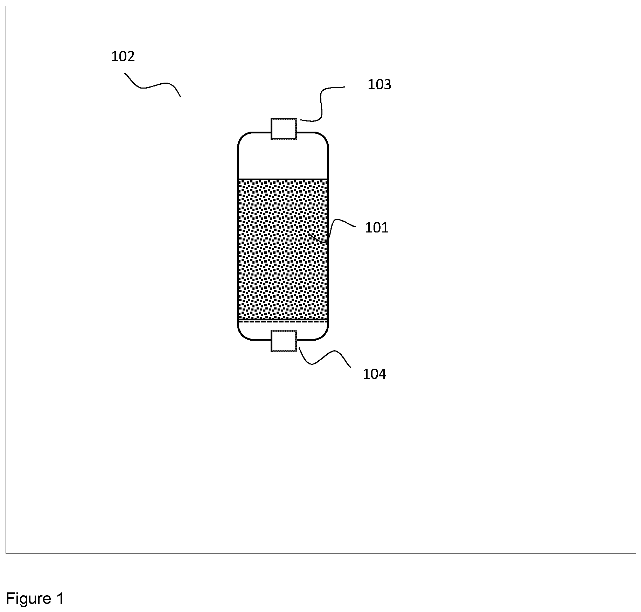

Fig. 1: shows an embodiment of the method according to the invention wherein a silicon-silver mix (101) is placed in a main reactor (102), comprising a feed port (103) and an outlet port (104).

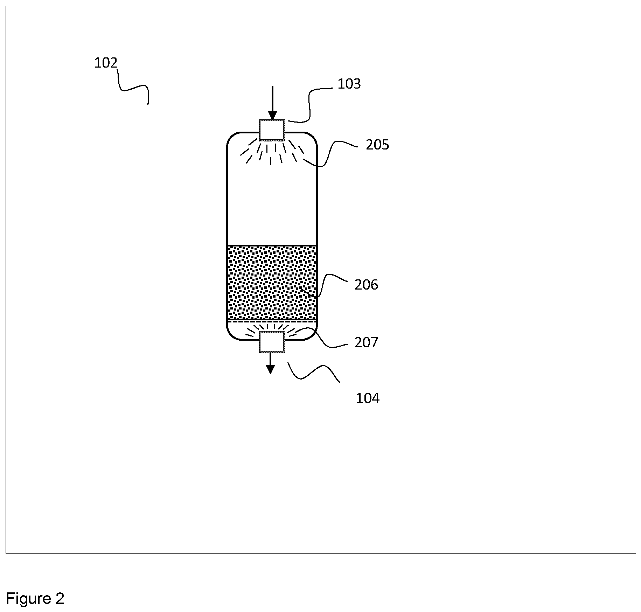

Fig. 2: shows an embodiment of the method according to the invention wherein a precursor gas or precursor liquid (205) is fed into the main reactor (102) preferably through the feed port (103) and reacts with a remaining solid material (206) and a silicon containing fluid (207) is evacuated from the main reactor (102) preferably through the outlet port (104).

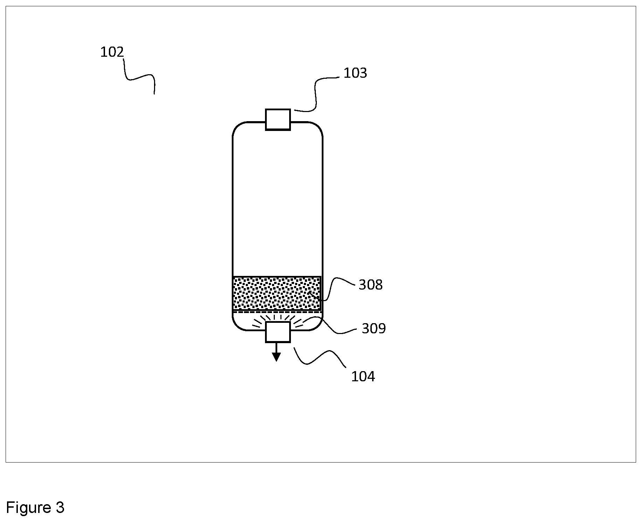

Fig. 3: shows an embodiment of the method according to the invention wherein the feeding of precursor gas or precursor liquid (205) is stopped and the remaining silicon containing fluid with reduced silicon concentration (309) is evacuated from the main reactor (102) preferably through the outlet port (104) and a silver rich residue (308) remains in the main reactor (102).

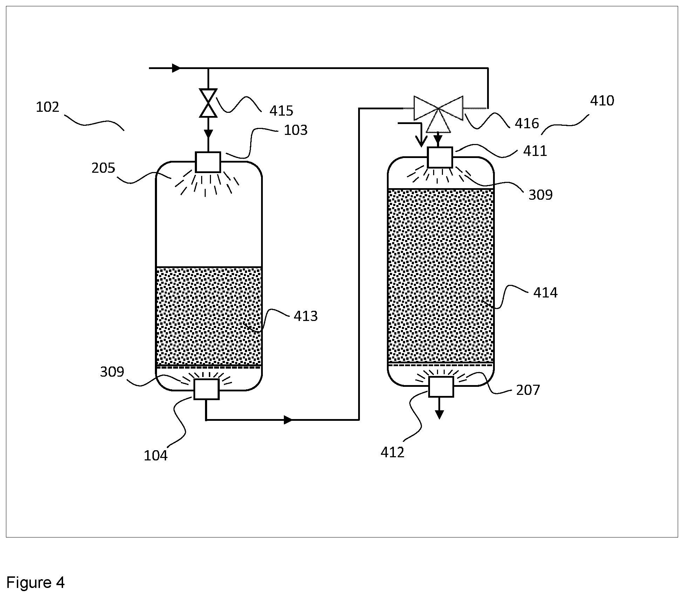

Fig. 4: shows an embodiment of the method according to the invention wherein the main reactor (102) is connected in series with an additional reactor (410) preferably comprising an feed port (411) and an outlet port (412) , where precursor gas or precursor liquid (205) is fed into the main reactor (102) preferably through the feed port (103) and reacts with a remaining solid material with reduced silicon concentration (413) and a silicon containing fluid with a reduced silicon concentration (309) is evacuated from the main reactor (102) preferably through the outlet port (104) and fed into the additional reactor (410) preferably through the feed port of the additional reactor (411) and reacts with the metallurgical grade silicon (414) in the additional reactor (410) and a silicon containing fluid (207) is evacuated from the additional reactor (410) preferably through the outlet port of the additional reactor (412). A two-way valve (415) allows stopping the feeding of precursor gas or precursor liquid (205) into the main reactor (102). A three-way valve (416) allows switching between feeding precursor gas or precursor liquid (205) and feeding silicon containing fluid with reduced silicon concentration (309) into the additional reactor (410).

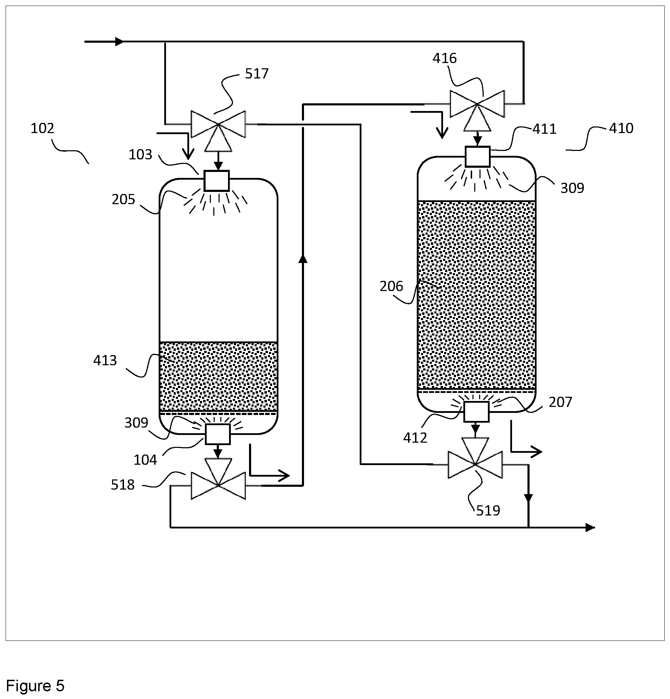

Fig. 5: shows an embodiment of the method according to the invention wherein the main reactor (102) is connected in series with an additional reactor (410), where precursor gas or precursor liquid (205) is fed into the main reactor (102) preferably through the feed port (103) and reacts with a remaining solid material with reduced silicon concentration (413) and a silicon containing fluid with a reduced silicon concentration (309) is evacuated from the main reactor (102) preferably through the outlet port (104) and fed into the additional reactor (410) preferably through the feed port of the additional reactor (411) where it reacts with a remaining solid material (206) and silicon containing fluid (207) is evacuated from the additional reactor (410) preferably through the outlet port of the additional reactor (412). Four three-way valves (416), (517), (518), and (519) allow switching between feeding precursor gas or precursor liquid (205) and feeding silicon containing fluid with reduced silicon concentration (309) for each of the reactors (102) and (410).

### MORE DETAILED DESCRIPTION OF THE FIGURES

Fig. 1 schematically shows an embodiment of the method wherein a silicon-silver mix (101) is placed in a main reactor (102) comprising a feed port (103) and an outlet port (104). The silicon-silver mix can be fed manually or with a feeding device. The feeding device can be a screw feeder or a vibrational feeder. In the Fig. 1 the main reactor (102) is shown as a fixed bed reactor.

Fig. 2 schematically shows an embodiment of the method, wherein a precursor gas or precursor liquid (205) is fed into the main reactor (102) preferably through the feed port (103). The precursor gas or precursor liquid (205) reacts with the silicon of a remaining solid material (206) resulting from the silicon-silver mix (101), and produces a silicon containing fluid (207). The precursor gas or precursor liquid (205) does not react with the silver of the remaining solid material (206) to form a gas or a liquid. The silicon containing fluid (207) is evacuated from the main reactor (102) preferably through the outlet port (104). By reacting with the precursor gas or precursor liquid (205) the silicon-silver mix (101) turns into a remaining solid material (206). The silicon concentration in the remaining solid material (206) in the main reactor (102) decreases and the silver concentration in the remaining solid material (206) in the main reactor (102) increases. Preferably silicon-silver mix (101) can be fed into the main reactor (102), while the reactor produces silicon containing fluid (207) until an amount of silver has accumulated in the remaining solid material (206) in the main reactor (102).

Fig. 3 schematically shows an embodiment of the method wherein the reaction is stopped by stopping the feeding of the precursor gas or precursor liquid (201) and by evacuating the remaining silicon containing fluid with a reduced silicon concentration (309), that may contain unreacted precursor gas or precursor liquid (201), from the main reactor (102), preferably through the outlet port (104). The remaining solid material (206) has turned into a silver rich residue (308) inside the main reactor (102) having a silver to silicon ratio that is at least 10 times higher than the silver to silicon ratio of the initial silicon-silver mix (101), preferably a silver to silicon ratio that is more than 100 times higher than the silver to silicon ratio of the silicon-silver mix (101), more preferably a silver to silicon ratio that is more than 1000 times higher than the silver to silicon ratio of the silicon-silver mix (101). Subsequently the silver rich residue (308) is collected from the main reactor (102).

Fig. 4 schematically shows an embodiment of the method wherein a main reactor (102) that was filled with a silicon-silver mix (101) is connected in series with an additional reactor (410) that was filled with metallurgical grade silicon (414). Precursor gas or precursor liquid (205) is fed through a two-way valve (415) into the main reactor (102). The main reactor (102) contains a remaining solid material with a reduced silicon concentration (413), that has a reduced silicon concentration because it has already reacted with precursor gas or precursor liquid (205). The precursor gas or precursor liquid (205) reacts with the remaining solid material with a reduced silicon concentration (413) in the main reactor (102) to produce a silicon containing fluid with a reduced silicon concentration (309). This silicon containing fluid with reduced silicon concentration (309) may contain unreacted precursor gas or precursor liquid (205). The silicon containing fluid with reduced silicon concentration (309) is evacuated from the main reactor (102) and fed through a three-way valve (416) into the additional reactor (410). In the additional reactor (410) the silicon containing fluid with reduced silicon concentration (309) reacts with the metallurgical grade silicon (414) to produce silicon containing fluid (207). The silicon containing fluid (207) is evacuated from the additional reactor (402). This configuration with a main reactor (401) and an additional reactor (410) allows to produce silicon containing fluid (207) and a silver rich residue (308) with a high silver to silicon ratio. Tubes are indicated by lines and the flow directions in the tubes are indicated by triangles.

Preferably the two-way valve (415) can close and the position of the three-way valve (416) can be changed to the position opposite of the position in Fig. 4 so that precursor gas or precursor liquid (205) is fed into the additional reactor (410) while the main reactor (102) does not produce silicon containing fluid with a reduced silicon concentration (309) so that the additional reactor (410) continues to produce silicon containing fluid (207) as sole reactor. Through the alternation of feeding of silicon containing fluid with a reduced silicon concentration (309) and precursor gas or precursor liquid (205) the additional reactor (410) can provide an uninterrupted flow of a silicon containing fluid (207) and the main reactor (102) can produce silver rich residue (308) with a high silver to silicon ratio.

Preferably the main reactor (102) can also produce silicon containing fluid (207) after it was filled with silicon-silver mix (101).

Preferably the silicon containing fluid with reduced silicon concentration (309) can have a silicon concentration that is close to that of the silicon containing fluid (207) or a lower silicon concentration.

Fig. 5 schematically shows an embodiment of the method wherein a main reactor (102) that was previously filled with a silicon-silver mix (101) is connected in series with an additional reactor (410) that was previously filled with silicon-silver mix (101). Precursor gas or precursor liquid (205) is fed into the main reactor (102) through the three-way valve (517). The reactor contains a remaining solid material with a reduced silicon concentration (413), that has a reduced silicon concentration because it has already reacted with precursor gas or precursor liquid (205). The precursor gas or precursor liquid (205) reacts with the remaining solid material with a reduced silicon concentration (413) to produce a silicon containing fluid with a reduced silicon concentration (309). This silicon containing fluid with reduced silicon concentration (309) may contain unreacted precursor gas or precursor liquid (205). The silicon containing fluid with reduced silicon concentration (309) is evacuated from the main reactor (102) and fed through the three-way valves (518) and (416) into the additional reactor (410). In the additional reactor (410) the silicon containing fluid with reduced silicon concentration (309) reacts with a remaining solid material (206) to produce silicon containing fluid (207). The silicon containing fluid (207) is evacuated from the additional reactor (410) through the three-way valve (519). This configuration with a main reactor (102) and an additional reactor (410) allows to produce silicon containing fluid (207) in the additional reactor (410) and a silver rich residue (308) with a high silver to silicon ratio in the main reactor (102). The positions of the valves (416), (517), (518) and (519) are indicated in Fig. 5 by small arrows next to the valve symbols.

Preferably all four three-way valves (416), (517), (518) and (519) can switch to the position that is opposite to that indicated in Fig. 5 so that the additional reactor (410) is fed with precursor gas or precursor liquid (205) and produces silicon containing fluid with reduced silicon concentration (309) and the main reactor (102) is fed with silicon containing fluid with reduced silicon concentration (309) produces silicon containing fluid (207).

Preferably all four three-way valves (416), (517), (518) and (519) switch regularly at the same time the position so that the two reactors (102) and (410) alternate between upstream and downstream and silver rich residue is collected from the upstream reactpr and the upstream reactor is filled with silicon-silver mix (101) before the valves switch position.

Preferably the three-way valves (518) and (519) can switch to the position that is opposite to that in the Fig. 5 so that precursor gas or precursor liquid (205) is fed in the main reactor (102) and silicon containing fluid (207) is evacuated from the main reactor (102) and the additional reactor (410) does not produce silicon containing fluid (207) and the silver rich residue (308) may be evacuated from the additional reactor (410) and the additional reactor (410) may be filled with silicon-silver mix (101).

Preferably the three-way valves (416) and (519) can switch to the position that is opposite to that in the Fig. 5 so that precursor gas or precursor liquid (205) is fed in the additional reactor (410) and silicon containing fluid (207) is evacuated from the additional reactor (410) and the main reactor (102) does not produce silicon containing fluid (207) and the silver rich residue (308) can be evacuated from the main reactor (102) and the main reactor (102) can be filled with silicon silver-mix (101).

Preferably at the beginning both reactors (102) and (410) are filled with silicon-silver mix (101) and then a sequence comprising the following steps starts:
i. The four three-way valves (416), (517), (518) and (519) are in the position shown in Fig. 5 so that precursor gas or precursor liquid (205) is fed into the main reactor (102) and the silicon containing fluid with reduced silicon concentration (309) evacuated from the main reactor (102) is fed into the additional reactor (410).
ii. When the remaining solid material with reduced silicon concentration (413) in the main reactor (102) has turned into a silver rich residue (308) with a target silver to silicon ratio the three-way valves (416) and (517) switch to the position that is opposite to that in Fig. 5. The additional reactor (410) is fed with precursor gas or precursor liquid (205) and silicon containing fluid (207) is evacuated from the additional reactor (410). The silver rich residue (308) is collected from the main reactor (102) and the main reactor (102) is filled with silicon silver mix (101).
iii. The three-way valves (518) and (519) switch to the position that is opposite to that in Fig. 5. The additional reactor (410) is fed with precursor gas or precursor liquid (205) and the main reactor (102) is fed with silicon containing fluid with reduced silicon concentration (309). When the remaining solid material with reduced silicon concentration (413) in the additional reactor (410) has turned into a silver rich residue (308) with a target silver to silicon ratio, the three-way valves (416) and (517) switch to the position shown in Fig. 5 and the silver rich residue (101) is collected from the additional reactor (410) and the additional reactor (410) is filled with silicon-silver mix (101).
iv. Then valves (518) and (519) switch to the position that is shown in Fig. 5 and the sequence can repeat from step i.

This sequence allows to produce continuously silicon containing fluid (207) and silver rich residue (308) without consuming metallurgical grade silicon (414).

With respect to further features and advantages of the embodiments shown in the figures, reference is made in its entirety to the general description.

### Experimental Section

### Example 1:

A Silicon-silver mix extracted from crystalline silicon type solar panel waste with an average particle size of 500 µm was placed in a fluidized bed reactor. The silver to silicon ratio of a sample of the silicon-silver mix was measured by ICP to 1.2:100. Then for 12h methylchloride is fed into the reactor and a silicon containing fluid, a gas containing various alkylchlorosilanes is evacuated from the reactor. At the beginning and after 12h a sample of 100g of the gas evacuated from the reactor is burned in a flame in air and the solid silica dust generated by the flame is collected with a filter. The mass of the dust is measured. After the reaction the remaining solid material in the fluidized bed reactor is collected and the silver to silicon ratio is measured by ICP.

The mass of dust collected at the beginning of the experiment was 39g. The mass of dust collected after 12h was 9g. It is deduced that the silicon concentration of the silicon containing fluid has decreased by a factor 4. The silver to silicon ratio of the remaining solid material was 3.5:1.

## Claims

1. A method for producing silicon containing fluid (207) and a silver rich residue (308) from crystalline silicon type solar panel waste comprising the following steps, preferably sequential in time:
a) preparing of a silicon-silver mix (101) from crystalline silicon type solar panel waste, where the silver of the silicon-silver mix (101) was applied to the silicon of the silicon-silver mix (101) through screen printing and firing,
b) placing said silicon-silver mix (101) in a main reactor (102),
c) feeding a precursor gas or precursor liquid (205) into the main reactor (102), to produce a silicon containing fluid (207), in particular a silicon containing gas and/or a silicon containing liquid, that comprises silicon containing molecules, where the silver to silicon ratio of said silicon containing fluid (207) is more than 5 times lower than that of a remaining solid material (206) resulting from the silicon-silver mix (101) inside the main reactor (102), by reaction between the precursor gas or precursor liquid (205) and the silicon of the remaining solid material (206) in the main reactor (102), and evacuating said silicon containing fluid (207) from the main reactor (102), and where the silver to silicon ratio of the remaining solid material (206) in the main reactor (102) preferably increases, preferably during step c,
d) stopping the reaction by stopping the feeding of precursor gas or precursor liquid (205) and by evacuating the remaining silicon containing fluid (207) and/or precursor gas or precursor liquid (205) from the main reactor (102), when the remaining solid material (206) has turned into a silver rich residue (308) inside the main reactor (102) having a silver to silicon ratio that is at least 10 times higher than the silver to silicon ratio of the initial silicon-silver mix (101), preferably a silver to silicon ratio that is more than 100 times higher than the silver to silicon ratio of the silicon-silver mix (101), more preferably a silver to silicon ratio that is more than 1000 times higher than the silver to silicon ratio of the silicon-silver mix (101), and collecting the silver rich residue (308) from the main reactor (102),
e) preferably repeating steps a) to d), more preferably steps b) to d), at least once.

2. Method according to claim 1, wherein the precursor gas or precursor liquid (205) comprises molecules selected from a group consisting of alkyl halides, chlorine, hydrogen chloride, hydrogen, alcohols or a mixture of at least two of the afore-said molecules.

3. Method according to claim 1 or claim 2, wherein the silicon containing molecules comprises molecules selected from a group consisting of alkylhalosilanes, alkoxysilanes, silicon tetrachloride, trichlorosilane or a mixture of at least two of the afore-said molecules.

4. Method according to any of the preceding claims, wherein the method comprises an additional step b'), carried out between step b) and step c): feeding silicon-silver mix (101) into the main reactor (102) and feeding precursor gas or precursor liquid (205) into the main reactor (102), to produce a silicon containing fluid (207), in particular a silicon containing gas and/or a silicon containing liquid, and evacuating silicon containing fluid (207) from the main reactor (102) until an amount of silver has accumulated in the remaining solid material (206) inside the main reactor (102).

5. Method according to any of the preceding claims, wherein the main reactor (102) and an additional reactor (410) are connected, preferably with tubes and valves (416) (517) (518) (519), so that they can be operated in series one after the other.

6. Method according to claim 5, wherein in step c) and/or b') the silicon containing fluid (207) evacuated from the main reactor (102) is fed into the additional reactor (410) that contains metallurgical grade silicon (414), and the silicon containing fluid (207) is evacuated from the additional reactor (410).

7. Method according to claim 5, wherein steps b) to d) are also carried out in the additional reactor (410), wherein while step c) is carried out in the main reactor (102) step b') or c) are carried out in the additional reactor (410) and while step c) is carried out in the additional reactor (410) steps b') or c) are carried out in the main reactor (102).

8. Method according to claim 7, wherein after carrying out steps a) to d) the main reactor (102) can be fed either with silicon containing fluid (207), evacuated from the additional reactor (410) while the additional reactor (410) is performing one of the steps b') to d), and/or with precursor gas or precursor liquid, and/or the additional reactor (410) can be fed either with the silicon containing fluid (207) evacuated from the main reactor (102) and/or with precursor gas or precursor liquid.

9. Method according to any of the preceding claims, wherein the temperature in the main reactor (102) and/or the additional reactor (410) is below 800°C, preferably below 400°C and the temperature in the main reactor (102) and/or the additional reactor (410) is above 50°C, and preferably above 100°C and more preferably above 200°C.

10. Method according to any of the preceding claims, wherein the silver in the silver rich residue (308) is in the form of metallic silver or silver chloride.

11. Method according to any of the preceding claims, wherein in step a) the silicon-silver mix (101) is prepared using one or more of the following process steps in any order:
a. Using mechanical removal of the aluminium frame pyrolysis to burn of the polymers of the crystalline silicon type solar panel waste,
b. Using electrostatic separation to increase the silicon concentration of the silicon-silver mix (101) by removing other materials,
c. Cleaning the silicon-silver mix (101) by acid leaching,
d. Mixing the silicon-silver mix (101) with metallurgical grade silicon (414),
e. Crushing the silicon-silver mix (101) to obtain a material with an average particle size of <10 mm, preferably <3 mm, and more preferably to <1 mm,
f. Using sieving to increase the silicon concentration of the silicon-silver mix (101) by removing other materials, and
g. Using air classification to increase the silicon concentration of the silicon-silver mix (101) by removing other materials.

12. Method according to any of the preceding claims, wherein the silicon-silver mix (101) comprises components selected from a group consisting of aluminium, glass, copper, other materials present in the crystalline silicon type solar panel waste or a mixture of at least two of the afore said components.

13. Method according to any of the preceding claims, wherein, after evacuating the silver rich residue (308) from the main reactor (102) and/or the additional reactor (410), this silver rich residue (308) is further refined by treating the silver rich residue (308) with chemical processes and/or metallurgical silver recycling processes.

14. Method according to any of the preceding claims, wherein the main reactor (102) and/or the additional reactor (410) is a fixed bed reactor, a stirred bed reactor, a fluidized bed reactor or a rotary kiln.

15. The method of any of the previous claims, wherein the silver rich residue (308) is used as alloying element for the production of an alloy melt comprising silver as alloying element, preferably comprising silver and one component selected from the group consisting of silicon and copper as alloying elements and more preferably comprising silver, silicon and copper as alloying elements.
